Europäisches Patentamt

European Patent Office

Office européen des brevets

(11) Veröffentlichungsnummer: **0 578 068 A1**

# EUROPÄISCHE PATENTANMELDUNG

(21) Anmeldenummer: **93110110.9**

(22) Anmeldetag: **24.06.93**

(51) Int. Cl.5: **C09D  133/06**, C09D 163/00

(30) Priorität: **07.07.92 DE 4222256**

(43) Veröffentlichungstag der Anmeldung:
**12.01.94 Patentblatt  94/02**

(84) Benannte Vertragsstaaten:
**AT BE CH DE ES FR GB IT LI NL SE**

(71) Anmelder: **BAYER AG**

**D-51368 Leverkusen(DE)**

(72) Erfinder: **Dhein, Rolf, Dr.**
**Deswatinesstrasse 30**
**D-47800 Krefeld(DE)**
Erfinder: **Reuter, Knud, Dr.**
**Scheiblerstrasse 99**
**D-47800 Krefeld(DE)**
Erfinder: **Bäcker, Lothar**
**Stürzelberger Strasse 73a**
**D-41541 Dormagen(DE)**
Erfinder: **Kubitza, Werner**
**Eduard-Spranger-Strasse 22**
**D-51377 Leverkusen(DE)**
Erfinder: **Naujoks, Karin**
**Kuckenberg 34a**
**D-51399 Burcheid(DE)**

(54) **Wässrige Beschichtungsmittel und seine Verwendung.**

(57)  Wäßriges Beschichtungsmittel, bestehend im wesentlichen aus einer wäßrigen Lösung und/oder Dispersion von
   a) einer Carboxylat- oder Sulfonatgruppen aufweisenden Polyacrylat-Komponente,
   b) mindestens einem aliphatischen oder cycloaliphatischen, mindestens difunktionellen Epoxidharz b1) und gegebenenfalls bis zu 20 Gew.-%, bezogen auf b1), mindestens eines monofunktionellen aliphatischen Epoxidharz b2),
   c) gegebenenfalls bis zu 10 Gew.-% eines mit Wasser mischbaren Lösungsmittels,
   d) bis zu 5 Gew.-% an externen Emulgatoren, sowie
   e) gegebenenfalls aus der Lacktechnologie Hilfs- und Zusatzmitteln,
   und die Verwendung des Beschichtungsmittels zur Herstellung von Beschichtungen auf beliebigen festen Substraten.

EP 0 578 068 A1

EP 0 578 068 A1

Die Erfindung betrifft ein neues wäßriges Beschichtungsmittel auf Basis von in Wasser gelöst und/oder dispergiert vorliegenden carboxyl- und/oder sulfonsäurefunktionellen Polyacrylatharzen als wesentlicher Bindemittelkomponente und (cyclo)aliphatischen Epoxidharzen als Härter, sowie die Verwendung der Beschichtungsmittel zur Herstellung von Beschichtungen.

Wäßrige Lacksysteme gewinnen heute aus ökologischen und ökonomischen Gründen zunehmend an Bedeutung. Die Substitution konventionell organisch gelöster Lacksysteme ist jedoch aus verschiedenen Gründen technisch schwierig.

So haben wäßrige Bindemittel auf Basis von Alkydharzen und Polyestern eine ausgeprägte Neigung zur Verseifung. Die Verseifung verursacht einen Molekulargewichtsabbau, was zu einer Qualitätsminderung der Bindemittel und der daraus erhältlichen Lackierungen führt. Weiterhin wird die Lagerfähigkeit solcher Bindemittel erheblich reduziert.

Häufig werden deshalb rein organisch gelöste Bindemittel hergestellt beziehungsweise in den Handel gebracht, die dann für die Applikation mit Wasser weiterverdünnt werden, Solche Systeme setzen bei der Applikation neben Wasser die im System enthaltenen organischen Lösungsmittel frei. Die Möglichkeit, mit Wasser zu verdünnen, wird bei diesen anionischen Bindemitteln erst durch Neutralisation mit Basen, meistens organischen Aminen, erreicht. Bei der Härtung werden diese Amine ebenfalls freigesetzt. In der Regel sind im industriellen Bereich dann aufwendige Verbrennungsanlagen notwendig, um die organischen Bestandteile aus der Abluft zu entfernen, während bei do-it-yourself Anwendungen diese Bestandteile in die Umgebungsluft emittiert werden.

Ein typisches Problem solcher Wasserlacksysteme ist auch die ausgeprägte Viskositätsanomalie. Beim Verdünnen der wäßrigen Lacklösungen steigt die Viskosität zuerst an, um dann nach Überschreiten eines Maximums schnell abzusinken. Die Lacke reagieren somit auf geringe Zugaben an Wasser mit erheblichen Viskositätsänderungen und erfordern deshalb ein besonders vorsichtiges Handling.

Ein weiterer Nachteil ist insbesondere für Einbrennsysteme auf Basis Polyester beziehungsweise Alkydharz in Kombination mit Melaminharzen als Vernetzer die verhältnismäßig hohe Härtungstemperatur, die üblicherweise mindestens 120°C beträgt. Dies erfordert für die Lackhärtung einen hohen Energieaufwand. Bei vielen Anwendungen, wie z.B. der Reparaturlackierung von Automobilen, ist eine Härtung unter solchen Temperaturbedingungen nicht möglich. In der Regel werden Lacke benötigt, die bei möglichst niedrigen Temperaturen härtbar sind und trotzdem nach Aushärtung eine ausreichende Wasser- und Lösemittelfestigkeit aufweisen. Ideal wären Bindemittel, die z.B. im Automobilbereich sowohl bei Temperaturen unter 100°C für die Reparaturlackierung als auch für die Erstlackierung bei höherer Temperatur nutzbar wären.

Andere Vernetzungsmechanismen, wie z.B. die Vernetzung von OH-funktionellen Polymeren mit Polyisocyanaten, haben gegenüber der Vernetzung mit Melaminharzen einige Vorteile. So kann die Härtung bei Raumtemperatur oder forciert bei 80 beziehungsweise 120°C vorgenommen werden. Die so erhältlichen Beschichtungen zeigen ein gutes mechanisches Eigenschaftsbild und sind in der Regel benzin- und wasserfest. Probleme gibt es jedoch, wenn dieses Vernetzungsprinzip auf wäßrige Formulierungen übertragen werden soll, da die Isocyanate gegenüber Wasser reaktiv sind. Deshalb war es bisher üblich, solche Systeme als rein organisch gelöste Systeme zu applizieren, mit den erwähnten Nachteilen bezüglich der Emission von organischen Lösungsmitteln.

Erst in jüngster Vergangenheit wurden spezielle wäßrige Lacksysteme bekannt (z.B. DE-OS 3 829 587), die als Bindemittel Kombinationen aus in Wasser gelöst und/oder dispergiert vorliegenden Polyhydroxylverbindungen und Polyisocyanaten mit freien Isocyanatgruppen enthalten, mit welchen das genannte Problem weitgehend überwunden werden kann. Dennoch bleibt die Schwierigkeit, daß die Nebenreaktionen von NCO-Gruppen mit Wasser die eigentliche Vernetzungsreaktion stören können, z.B., wenn nicht genaue Vorschriften über die Zusammensetzung der Lackrezeptur und die Härtungsbedingungen eingehalten werden.

Bindemittel aus einem Amino- beziehungsweise Ammoniumgruppen aufweisenden Polymeren und Epoxiden zeigen ebenfalls eine hohe Reaktivität und lassen sich bei Temperaturen unter 100°C härten. Die basischen Gruppen verleihen den vernetzten Beschichtungen jedoch eine hohe Hydrophilie, die sich negativ auf die Wasserfestigkeit auswirkt.

Der Erfindung lag daher die Aufgabe zugrunde, ein neues Beschichtungssystem zur Verfügung zu stellen, welches aus weitgehend kolöserfreier wäßriger Phase applizierbar ist, ohne Viskositätsanomalie verdünnbar ist, über einen breiten Temperaturbereich gehärtet werden kann, insbesondere aber auch bei nur mäßig erhöhten Temperaturen oder Raumtemperatur härtbar ist, eine lange Verarbeitungszeit und nach der Härtung gute Wasserfestigkeit aufweist.

Diese Aufgabe konnte mit der Bereitstellung der nachstehend näher beschriebenen erfindungsgemäßen Beschichtungsmittel gelöst werden.

2

Gegenstand der Erfindung sind wäßrige Beschichtungsmittel, bestehend im wesentlichen aus einer wäßrigen Lösung und/oder Dispersion von

a) einer Polyacrylat-Komponente, bestehend aus mindestens einem, gegebenenfalls teilweise in der Salzform vorliegende carboxyl- oder sulfonsäurefunktionellen Copolymerisat olefinisch ungesättigter Monomerer mit einer Säurezahl von 30 bis 240 mg KOH/g, einer Hydroxylzahl von 0 bis 180 mg KOH/g und einem Molekulargewicht Mn von 500 bis 50.000,

b) einer Epoxid-Komponente, bestehend aus

b1) mindestens einem aliphatischen oder cycloaliphatischen Epoxidharz mit im Mittel mindestens 2 Epoxidgruppen pro Molekül und einem Epoxidwert von 0,2 bis 2,0 Äquivalenten Epoxid/100 g und gegebenenfalls

b2) bis zu 20 Gew.-%, bezogen auf das Gewicht von b1), mindestens eines aliphatischen Monoepoxids mit 7 bis 25 Kohlenstoffatomen,

c) gegebenenfalls bis zu 10 Gew.-%, bezogen auf das Gesamtgewicht der Komponenten a) bis e) eines organischen, mit Wasser mischbaren Lösungsmittels, gegebenenfalls

d) bis zu 5 Gew.-%, bezogen auf das Gesamtgewicht der Komponenten a) bis e) an externen Emulgatoren sowie gegebenenfalls

e) aus der Lacktechnologie an sich bekannten Hilfs- und Zusatzmitteln

mit der Maßgabe, daß Art und Mengenverhältnisse der Komponenten a) und b) einem Äquivalentverhältnis von unneutralisierten Säuregruppen der Komponente a) zu Epoxidgruppen der Komponente b) von 1:0,5 bis 1:3 entsprechen.

Gegenstand der Erfindung ist auch die Verwendung dieser Beschichtungsmittel zur Herstellung von bei 5 bis 140°C auszuhärtenden Beschichtungen auf beliebigen Substraten.

Bei der Komponente a) handelt es sich um carboxyl- oder sulfonsäurefunktionelle Copolymerisate mit Säurezahlen von ca. 30 bis ca. 240 mg KOH/g und des Hydroxylzahlbereiches 0 bis ca. 180 mg KOH/g. Die Säurezahl bezieht sich hierbei sowohl auf freie, nicht neutralisierte Säuregruppen, insbesondere Carboxylgruppen, als auch auf neutralisiert vorliegende Säuregruppen, insbesondere Carboxylatgruppen. Im allgemeinen liegen in den Copolymerisaten 0 bis 30 %. der genannten Säurezahl entsprechenden Säuregruppen in neutralisierter Form vor. Als Neutralisationsmittel dienen insbesondere Ammoniak oder aliphatische Amine, insbesondere solche des Molekulargewichtsbereichs 31 bis 200 wie beispielsweise Methylamin, Dimethylamin, Trimethylamin, Triethylamin, Ethanolamin, 2-Amino-2-methyl-propanol-1 oder N,N-Dimethylethanolamin. Die Copolymerisate weisen im allgemeinen ein mittels Gelpermeationschromatographie mit Polystyrol als Standard ermitteltes Molekulargewicht Mn von 500 bis 50.000, vorzugsweise 1.000 bis 25.000 auf.

Besonders gut als Komponente a) geeignet sind Copolymerisate der genannten Art aus

a1) 0 bis 70, vorzugsweise 0 bis 50 Gew.-% Styrol,

a2) 0 bis 70, vorzugsweise 0 bis 50 Gew.-% Methylmethacrylat,

a3) 0 bis 70, vorzugsweise 0 bis 50 Gew.-% einer Acrylatkomponente, bestehend aus mindestens einem $C_1$-$C_8$-Alkylacrylat,

a4) 0 bis 30, vorzugsweise 0 Gew.-% mindestens einer Hydroxylgruppen aufweisenden Komponente, bestehend aus mindestens einem Hydroxyalkyl(meth)acrylat mit 1 bis 4 Kohlenstoffatomen im Hydroxyalkylrest,

a5) 5 bis 40, vorzugsweise 10 bis 30 Gew.-% einer Säure-Komponente, bestehend aus mindestens einer Säure, ausgewählt aus der Gruppe bestehend aus Acrylsäure, Methacrylsäure und Vinylsulfonsäure, vorzugsweise Methacrylsäure,

a6) 0 bis 30, vorzugsweise 0 Gew.-% an anderen ethylenisch ungesättigten Monomeren

besteht, mit der Maßgabe, daß die Summe der prozentualen Anteile der Komponenten a1) bis a6) 100 Gew.-% ergibt und 0 bis 30 Mol-% der eingebauten Säuregruppen in mit aliphatischen Aminen oder Ammoniak neutralisierter Form vorliegen.

Geeignete Monomere a3) sind beispielsweise Methylacrylat, Ethylacrylat, n-Propylacrylat, iso-Propylacrylat, n-Butylacrylat, n-Hexylacrylat, n-Octylacrylat und 2-Ethylhexylacrylat. Bevorzugt worden n-Butylacrylat, n-Hexylacrylat, 2-Ethylhexylacrylat, insbesondere n-Butyl- und/oder n-Hexylacrylat.

Als hydroxylfunktionelle (Meth)acrylate a4) können beispielsweise Hydroxyethyl(meth)acrylat, 2-Hydroxypropyl(meth)acrylat, 3-Hydroxypropyl(meth)acrylat, 4-Hydroxybutyl(meth)acrylat oder beliebige Gemische dieser Monomeren verwendet werden. Vorzug wird jedoch 2-Hydroxyethylmethacrylat und dem technischen Gemisch aus 2- und 3-Hydroxypropylmethacrylat gegeben.

Als Monomer a5) kommt, wie bereits ausgeführt, Methacrylsäure zum Einsatz, die vorzugsweise in einer Menge von 15 bis 25 Gew.-%, bezogen auf das Gesamtgewicht aller Monomeren, verwendet wird.

Geeignete Monomere a6), die wahlweise verwendet werden können, sind beispielsweise substituierte Styrol-Abkömmlinge wie die isomeren Vinyltoluole, $\alpha$-Methylstyrol, Propenylbenzol, $C_5$-$C_{12}$-Cycloalkyl-(meth)acrylate, Vinylester wie Vinylacetat, -propionat oder -versatat oder N-Methoxymethyl(meth)-acrylamide.

Die Emulgierbarkeit der Copolymerisate a) hängt vor allem von der Konzentration einer eingebauten anionischen Gruppe und von der An- beziehungsweise Abwesenheit von externen Emulgatoren ab. Besonders bevorzugt wird die Hydrophilie der Komponente a) über den Einbau von Säuregruppen, deren Neutralisationsgrad und/oder die Mitverwendung von externen Emulgatoren d) so eingestellt, daß mindestens 20 Gew.-%, vorzugsweise mindestens 80 Gew.-% der Komponente a) in in Wasser emulgierter und nur zum Rest in in Wasser gelöster Form vorliegen. Besonders bevorzugt sind solche wäßrigen Copolymerisate a), die durch Emulsionspolymerisation im wäßrigen Milieu hergestellt worden sind und demzufolge im wesentlichen in in Wasser emulgierter Form vorliegen.

Herstellungsmethoden für solch wäßrige Emulsionen sind Stand der Technik und dem Fachmann bekannt. Umfangreiche Beschreibungen finden sich z.B. in Houben-Weyl, Methoden der organischen Chemie, Band EZO, Makromolekulare Stoffe 1, 4. Auflage, 1987, S. 218 ff., Georg Thieme Verlag.

Als Komponente b) geeignete Epoxidharze sind insbesondere b1) niedermolekulare (cyclo)aliphatische Verbindungen, die zumindest in Gegenwart der Emulgatoren d) in Wasser gut löslich beziehungsweise emulgierbar sind, pro Molekül im statistischen Mittel mindestens 2, vorzugsweise 2 bis 5 Epoxidgruppen, bei 25°C eine Viskosität von 50 bis 10.000 mPas. und einen Epoxidwert von 0,2 bis 2,0 Äquivalenten Epoxid pro 100 g Feststoff aufweisen.

Ein sehr gut geeignetes, derartiges Epoxidharz ist beispielsweise "Glycidether 100", ein Handelsprodukt der Fa. Raschig AG. Glycidether 100 ist ein Epoxid-Gemisch auf Glycidyl-glycerin-ether-Basis mit einem Epoxidwert von 0,67 bis 0,70 Äquivalenten Epoxid/100 g und einer Viskosität bei 25°C von 140 bis 175 mPas., das insbesondere eine gute Verträglichkeit mit Wasser aufweist. Ein weiteres, als Komponente b1) geeignetes Handelsprodukt ist beispielsweise ®Epikote 877 der Fa. Shell.

In der Komponente b) können neben den wesentlichen Komponenten b1) gegebenenfalls auch b2) aliphatischen Monoepoxide als Reaktivverdünner vorliegen. Derartige reaktive Verdünner b2) werden gegebenenfalls in Mengen bis zu 20 Gew.-%, bezogen auf das Gewicht der Komponente b1) mitverwendet. Geeignete Komponenten b2) sind beispielsweise Glycidether aliphatischer $C_4$-$C_{22}$-Alkohole, wie Butylglycidether oder epoxidierte Olefine, wie z.B. epoxidierte $\alpha$-Olefine, etwa Reaktiverdünner Edenol 817 RV der Fa, Henkel.

In den erfindungsgemäßen Beschichtungsmitteln werden Art und Mengenverhältnisse der Komponenten a) und b) im Rahmen der gemachten Offenbarung so gewählt, daß das Holverhältnis von unneutralisierten Säuregruppen der Komponente a) zu Epoxidgruppen der Komponente b) bei 1:3 bis 1:0,5, vorzugsweise 1:1,5 bis 1:0,75 liegt.

Neben den erfindungswesentlichen Komponenten a) und b) können in den erfindungsgemäßen Beschichtungsmitteln auch c) bis zu 10 Gew.-%, bezogen auf das Gewicht der Komponenten a) bis e) an mit Wasser mischbaren organischen Lösungsmitteln vorliegen. Derartige Lösungsmittel sind beispielsweise Butoxyethanol, Methoxypropanol, Ethanol und Aceton.

In den erfindungsgemäßen Beschichtungsmitteln liegen oftmals externe Emulgatoren d) vor, die die Emulgierbarkeit der erfindungswesentlichen Komponenten a) und b) unterstützen. Diese externen Emulgatoren werden, falls überhaupt, in Mengen von bis zu 5 Gew.-%, bezogen auf das Gesamtgewicht der Komponenten a) bis e) mitverwendet. Geeignete externe Emulgatoren sind beispielsweise 3-Benzyl-4-hydroxy-biphenyl-polyglykolether sowie das Natriumsalz der Di-sek.-butylnaphthalinsulfonsäure.

Außer den genannten Bestandteilen a) bis d) Können in den erfindungsgemäßen Beschichtungsmitteln auch e) weitere aus der Lacktechnologie an sich bekannte Hilfsmittel vorliegen. Beispielhaft genannt seien Pigmente, Entschäumungsmittel, Verlaufmittel, Dispergierhilfsmittel für die Pigmentverteilung, Füllstoffe, Katalysatoren für die Epoxid-Additionsreaktion oder auch weitere, von der Komponente c) verschiedene, mit Wasser nicht mischbare Hilfslösungsmittel, die jedoch aufgrund der Anwesenheit der Emulgatoren im Gesamtsystem emulgierbar sind.

Zur Herstellung der gebrauchsfertigen Beschichtungsmittel kann beispielsweise so vorgegangen werden, daß die Epoxidkomponente b) in der wäßrigen oder wäßrigorganischen Emulsion der Komponente a) (die gegebenenfalls hydrophile Lösungsmittel c) oder auch hydrophobe Lösungsmittel der zuletzt angesprochenen Art, sowie Emulgatoren d) enthalten kann) emulgiert oder gelöst wird. Die zumindest in Anwesenheit der Emulgatoren d) gute Wasserverträglichkeit der Komponente b) gewährleistet eine gute Durchmischung durch einfaches Verrühren bei Raumtemperatur.

Die gegebenenfalls mitverwendeten Hilfs- und Zusatzmittel b) werden dem System vorzugsweise vor der Zugabe der Komponente b) zugesetzt.

Die erfindungsgemäßen Beschichtungsmittel weisen im allgemeinen einen Wassergehalt von 20 bis 75 Gew.-% und einen Gesamtgehalt an hydrophilen Lösungsmitteln c) und sonstigen flüchtigen Lösungsmitteln, die Teil der Komponente e) sein können, von maximal 10 Gew.-% auf.

Die erfindungsgemäßen Beschichtungsmittel weisen bei Raumtemperatur eine Verarbeitungszeit von mindestens 10 h, oftmals von mehr als 24 h auf.

Die Applikation der erfindungsgemäßen Beschichtungsmittel kann nach den üblichen Methoden wie z.B. Spritzen, Tauchen und Streichen erfolgen. Die Aushärtung der Beschichtungen kann innerhalb eines weiten Temperaturbereichs von 5 bis 160°C, vorzugsweise 5 bis 140°C erfolgen. Vorzugsweise findet die Aushärtung bei Raum- bzw. Umgebungstemperatur statt. Bei erhöhten Härtungstemperaturen, beispielsweise bei 80 bis 140°C reichen oftmals Einbrennzeiten von 15 bis 45 Minuten aus. Unabhängig von der Härtungstemperatur werden Lackfilme erhalten, die sich insbesondere durch Kratzfestigkeit, Wasserfestigkeit, Lösungsmittelresistenz und hohen Glanz auszeichnen.

Die erfindungsgemäßen Beschichtungsmittel zeichnen sich zudem durch die fehlende Viskositätanomalie ("Wasserberg") aus; d.h., bei Verdünnung mit Wasser tritt kein intermediärer Anstieg der Viskosität ein.

Die erfindungsgemäßen Beschichtungsmittel eignen sich insbesondere zur Herstellung von Grundierungen oder Decklackierungen auf beliebigen Substraten, besonders aber auf Beton, Holz, Metall und Kunststoffen. Geeignet sind die Beschichtungsmittel beispielsweise zur Herstellung von Füllern, Base-Coats und Clear-Coats bei der Erst- und Reparaturlackierung von Kraftfahrzeugen, für die Möbellackierung, Industrielacke oder für den Bautenschutz.

Die in nachfolgenden Beispielen angegebenen Teile sind jeweils Gewichtsteile.

Beispiele

In den nachfolgenden Lackbeispielen wurden die folgenden Epoxidharze b1) bzw. die nach nachstehenden Herstellungsbeispielen erhaltenen Polyacrylatharze a) eingesetzt.

Glycidether A

Epoxidgemisch auf Glycidyl-glyzerin-ether-Basis, Flammpunkt 118 bis 135°C (Abel-Penski), Hazen-Farbzahl maximal 200, Epoxidwert: ca. 0,68 Äquivalente Epoxid/ 100 g, Viskosität (25°C) ca. 155 mPas (Handelsprodukt der Fa. Raschig, Ludwigshafen, Handelsbezeichnung: Glycidether 100).

Glycidylether B

Niedrigviskoses, aliphatisches Diepoxid, Viskosität 40 bis 90 mPas. Epoxidwert: ca. 0,308 Äquivalente Epoxid/100 g (Handelsprodukt der Fa. Shell, Handelsbezeichnung: ®Epikote 877).

Polyacrylat-Beispiel 1

In einer Rührapparatur ausgestattet mit Rückflußkühler, Innenthermometer und Tropftrichter wurden unter Überleiten von 3 l $N_2$/h 554,4 Teile destilliertes Wasser, 3,9 Teile Emulgator 1 (3-Benzyl-4-hydroxy-biphenyl-polyglykolether) und 0,75 Teile Emulgator 2 (Di-sek.butylnaphthalinsulfonat) vorgelegt und unter intensivem Rühren auf 80°C aufgeheizt.

Dann wurde bei 80°C eine Lösung aus 1,25 Teilen Ammoniumperoxodisulfat und 11,25 Teilen Wasser zugegeben und genau 5 Minuten gerührt. Von einem Monomerengemisch bestehend aus 72,7 Teilen Styrol, 134,8 Teilen Methylmethacrylat, 78,5 Teilen n-Butylacrylat, 85,7 Teilen Methacrylsäure und 7,4 Teilen Dodecylmercaptan wurden 10 Vol-% auf einmal bei 80°C zugegeben. Nach 15 Minuten Rühren bei 80°C wurde dann der Rest des Monomerengemisches in 2 Stunden zugetropft.

Nachdem alles zugetropft war, wurde eine Lösung aus 0,25 Teilen Ammoniumperoxodisulfat in 12,25 Teilen Wasser in 10 Minuten zugetropft und anschließend noch 2 Stunden bei 80°C gerührt. Die erhaltene Emulsion wies einen Polymergehalt von 40,3 Gew.-% auf. Die Säurezahl des Polymeren war 115,1 mg KOH/g. Durch Zutropfen einer 20%igen N,N-Dimethylethanolaminlösung in Butoxyethanol wurde die Lösung zu 15 %, bezogen auf die angegebene Säurezahl, neutralisiert. Die erhaltene Emulsion wies einen Polymergehalt von 38,9 Gew.-% auf.

Polyacrylat-Beispiel 2

In einer Rührapparatur wie in Beispiel 1 wurden unter Überleiten von 3 l $N_2$/h 542,7 Teile destilliertes Wasser, 3,9 Teile Emulgator 1 und 0,75 Teile Emulgator 2 vorgelegt und dann unter intensivem Rühren auf 80°C aufgeheizt. Dann wurde bei 80°C eine Lösung aus 1,25 Teilen Ammoniumperoxodisulfat und 11,25 Teilen Wasser zugegeben und genau 5 Minuten gerührt. Von einem Monomerengemisch bestehend aus 41,6 Teilen Styrol, 90 Teilen Methylmethacrylat, 113,3 Teilen n-Butylacrylat, 39,0 Teilen Hydroxyethylmethacrylat, 80 Teilen Methacrylsäure und 7,4 Teilen Dodecylmercaptan wurden 10 Vol-% auf einmal bei 80°C zugegeben. Nach 15minütigem Rühren bei 80°C wurde dann das restliche Monomerengemisch in 2 Stunden zugetropft. Nachdem alles zugetropft war, wurde eine Lösung aus 0,25 Teilen Ammoniumperoxodisulfat in 12,25 Teilen Wasser in 10 Minuten zugetropft und anschließend noch 2 h bei 80°C gerührt. Die erhaltene Emulsion wies einen Polymergehalt von 40,0 Gew.-% auf. Die Säurezahl des Polymeren war 141,8 mg KOH/g. Durch Zutropfen einer 20%igen N,N-Dimethylethanolaminlösung in Butoxyethanol wurde die Emulsion zu 15 %, bezogen auf Säurezahl, neutralisiert. Die erhaltene Emulsion wurde über eine Seitz-Klärschicht T5500 filtriert. Als Polymergehalt der filtrierten Lösung ergab sich 40,9 Gew.-%.

Polyacrylat-Beispiel 3

In einer Rührapparatur wie in Beispiel 1 beschrieben wurden unter Überleiten von 3 l $N_2$/h 544,8 Teile destilliertes Wasser, 3,9 Teile Emulgator 1 und 0,75 Teile Emulgator 2 vorgelegt und dann unter intensivem Rühren auf 80°C aufgeheizt. Dann wurden bei 80°C eine Lösung aus 1,25 Teilen Ammoniumperoxodisulfat in 11,25 Teilen destilliertem Wasser zugegeben und genau 5 Minuten gerührt. Von einem Monomerengemisch, bestehend aus 41,6 Teilen Styrol, 100 Teilen Methylmethacrylat, 113,3 Teilen n-Butylacrylat, 39 Teilen Hydroxyethylmethacrylat, 71,4 Teilen Methacrylsäure und 7,4 Teilen Dodecylmercaptan, wurden 10 Vol-% auf einmal bei 80°C zugegeben. Nach 15minütigem Rühren bei 80°C wurde dann das restliche Monomerengemisch in 2 Stunden zugetropft. Nach Zutropfen wurde dann eine Lösung, bestehend aus 0,25 Teilen Ammoniumperoxodisulfat und 12,25 Teilen destilliertem Wasser, zugetropft. Man ließ noch 2 h bei 80°C unter intensivem Rühren nachreagieren. Die erhaltene Emulsion wies eine Säurezahl von 52,4 mg KOH/g und einen Polymergehalt von 40 Gew.-% auf, was auf das Polymer bezogen eine rechnerische Säurezahl von 131 mg KOH/g ergibt. Nach Abkühlen auf Raumtemperatur wurde die Emulsion zu 15 % bezogen auf die gemessene Säurezahl mit einer 20%igen N,N-Dimethylethanlaminlösung in Butoxyethanol neutralisiert. Die erhaltene Emulsion wurde über eine Seitz-Klärschicht T5500 filtriert. Der Festgehalt ergab sich danach zu 39,2 Gew.-%.

Polyacrylat-Beispiel 4

In einer Rührapparatur wie in Polyacrylat-Beispiel 1 wurden unter Überleiten von 3 l $N_2$/h 557,8 Teile destilliertes Wasser, 3,9 Teile Emulgator 1 und 0,75 Teile Emulgator 2 vorgelegt und dann unter intensivem Rühren auf 80°C aufgeheizt.

Dann wurde bei 80°C eine Lösung aus 1,25 Teilen Ammoniumperoxodisulfat und 11,25 Teilen Wasser zugegeben und genau 5 Minuten gerührt. Von einem Monomerengemisch bestehend aus 62,4 Teilen Styrol, 100 Teilen Methylmethacrylat, 113,3 Teilen n-Butylacrylat, 39,0 Teilen Hydroxyethylmethacrylat, 63,96 Teilen Methacrylsäure und 7,4 Teilen Dodecylmercaptan wurden 10 Vol-% auf einmal bei 80°C zugegeben. Nach 15 Minuten Rühren bei 80°C wurde dann das restliche Monomerengemisch in 2 Stunden zugetropft.

Nachdem alles zugetropft war, wurde eine Lösung aus 0,25 Teilen Ammoniumperoxodisulfat in 12,25 Teilen Wasser in 10 Minuten zugetropft und anschließend noch 2 Stunden bei 80°C gerührt. Die erhaltene Emulsion wies einen Polymergehalt von 40,0 Gew.-% auf. Die Säurezahl des Polymeren war 146,8 mg KOH/g. Durch Zutropfen einer 20%igen N,N-Dimethylethanolaminlösung in Butoxyethanol wurde die Emulsion zu 15 %, bezogen auf die angegebene Säurezahl, neutralisiert. Die erhaltene Emulsion wurde über eine Seitz-Klärschicht T5500 filtriert. Als Polymerengehalt der filtrierten Lösung ergab sich 39,3 Gew.-%.

Polyacrylat-Beispiel 5

In einer Rührapparatur wie in Polyacrylat-Beispiel 1 beschrieben wurden unter Überleiten von 3 l $N_2$/h 590,25 Teilen destilliertes Wasser, 3,9 Teile Emulgator und 0,75 Teile Emulgator 1 vorgelegt und dann unter intensivem Rühren auf 80°C aufgeheizt. Dann wurden bei 80°C eine Lösung aus 1,25 Teilen Ammoniumperoxodisulfat in 11,25 Teilen destilliertem Wasser zugegeben und genau 5 Minuten gerührt. Von einem Monomergemisch aus 65,5 Teilen Styrol, 52,5 Teilen Methylmethacrylat, 141,3 Teilen n-Butylacrylat, 72,3 Teilen Hydroxyethylmethacrylat, 63,96 Teilen Methacrylsäure und 7,4 Teilen Dodecylmercaptan wurden 10 Vol-% auf einmal bei 80°C zugegeben. Nach 15minütigem Rühren bei 80°C wurde dann das restliche Monomerengemisch in 2 Stunden zugetropft. Nach dem Zutropfen wurde dann eine Lösung, bestehend aus 0,25 Teilen Ammoniumperoxodisulfat und 12,25 Teilen destilliertem Wasser, zugetropft. Man ließ noch 2 h bei 80°C unter intensivem Rühren nachreagieren. Die erhaltene Emulsion wies eine Säurezahl von 42,8 mg KOH/g und einen Polymergehalt von 40 Gew.-% auf, was auf das Polymer bezogen eine rechnerische Säurezahl von 107 mg KOH/g ergibt. Nach Abkühlen auf Raumtemperatur wurde die Emulsion zu 15 %, bezogen auf die gemessene Säurezahl, mit einer 20%igen N,N-Dimethylethanolaminlösung in Butoxyethanol neutralisiert. Die erhaltene Emulsion wurde über eine Seitz-Klärschicht T5500 filtriert. Der Festgehalt ergab sich danach zu 38,6 Gew.-%.

Lackbeispiele

Ausgehend von den Emulsionen gemäß Polyacrylat-Beispiel 1, 4 und 5 wurden mit Glycidylether A Lacke hergestellt. Bezogen auf den Polymeranteil der Emulsionen wurde dabei soviel Glycidylether 100 zugegeben, daß das Verhältnis Copolymerisat zu Glycidylether 100 : 50 beziehungsweise 100 : 30 ergab. Dabei ist es völlig ausreichend, wenn der Vernetzer von Hand in die wäßrige Emulsion eingerührt wird. Die erhältlichen vernetzungsfähigen Lacke wiesen folgende Zusammensetzungen auf (Beispiel 1 bis 6):

Beispiel 1

Verhältnis Copolymerisat: Glycidylether A = 100 : 30, entsprechend einem Äquivalentverhältnis von unneutralisiertem Carboxylgruppen zu Epoxidgruppen von 1:1.
34,8 Gew.-% Copolymerisat gemäß Polyacrylat-beispiel 1
1,0 Gew.-% N,N-Dimethylethanolamin
3,8 Gew.-% Butoxyethanol
0,3 Gew.-% Emulgator 1
0,1 Gew.-% Emulgator 2
10,5 Gew.-% Glycidylether A
49,5 Gew.-% Wasser
100,0 Gew.-%

Beispiel 2

Verhältnis Copolymerisat: Glycidylether A = 100 : 50, entsprechend einem Äquivalentverhältnis von unneutralisiertem Carboxylgruppen zu Epoxidgruppen von 1:1,55.
32,5 Gew.-% Copolymerisat gemäß Polyacrylat-beispiel 1
0,9 Gew.-% N,N-Dimethylethanolamin
3,6 Gew.-% Butoxyethanol
0,3 Gew.-% Emulgator 1
0,1 Gew.-% Emulgator 2
16,3 Gew.-% Glycidylether A
46,3 Gew.-% Wasser
100,0 Gew.-%

Beispiel 3

Verhältnis Copolymerisat: Glycidylether A = 100 : 30, entsprechend einem Äquivalentverhältnis von unneutralisiertem Carboxylgruppen zu Epoxidgruppen von 1:1,27.
34,7 Gew.-% Copolymerisat gemäß Polyacrylat-beispiel 1
1,2 Gew.-% N,N-Dimethylethanolamin
4,7 Gew.-% Butoxyethanol
0,3 Gew.-% Emulgator 1
0,1 Gew.-% Emulgator 2
10,5 Gew.-% Glycidylether A
48,5 Gew.-% Wasser
100,0 Gew.-%

Beispiel 4

Verhältnis Copolymerisat: Glycidylether A = 100 : 50, entsprechend einem Äquivalentverhältnis von unneutralisiertem Carboxylgruppen zu Epoxidgruppen von 1:1,23.

32,4 Gew.-% Copolymerisat gemäß Polyacrylat-beispiel 4
1,1 Gew.-% N,N-Dimethylethanolamin
4,4 Gew.-% Butoxyethanol
0,3 Gew.-% Emulgator 1
0,1 Gew.-% Emulgator 2
16,4 Gew.-% Glycidylether A
45,3 Gew.-% Wasser
$\overline{100,0 \text{ Gew.-\%}}$

Beispiel 5

Verhältnis Copolymerisat: Glycidylether A = 100 : 30, entsprechend einem Äquivalentverhältnis von unneutralisiertem Carboxylgruppen zu Epoxidgruppen von 1:1,07.

34,6 Gew.-% Copolymerisat gemäß Polyacrylat-beispiel 5
0,9 Gew.-% N,N-Dimethylethanolamin
3,5 Gew.-% Butoxyethanol
0,3 Gew.-% Emulgator 1
0,1 Gew.-% Emulgator 2
10,4 Gew.-% Glycidylether A
50,2 Gew.-% Wasser
$\overline{100,0 \text{ Gew.-\%}}$

Beispiel 6

Verhältnis Copolymerisat: Glycidylether A = 100 : 50, entsprechend einem Äquivalentverhältnis von unneutralisierten Carboxylgruppen zu Epoxidgruppen von 1:1,67.

32,2 Gew.-% Copolymerisat gemäß Polyacrylat-beispiel 5
0,8 Gew.-% N,N-Dimethylethanolamin
3,3 Gew.-% Butoxyethanol
0,3 Gew.-% Emulgator 1
0,1 Gew.-% Emulgator 2
16,2 Gew.-% Glycidylether A
47,0 Gew.-% Wasser
$\overline{100,0 \text{ Gew.-\%}}$

Diese Lacke wurden mit einer Naßfilmdicke von 180µm auf Glasplatten aufgezogen und dann jeweils 30 Minuten bei 80 und 120°C gehärtet. Es wurden glänzende, vernetzte Filme erhalten, die eine gute Kratzfestigkeit aufwiesen. Die bei 80°C gehärteten Filme zeigten eine vorzügliche Nachhärtung bei Raumtemperatur, so daß nach 2 bis 3 Tagen keinerlei Anlösbarkeit mehr festgestellt werden konnte. Die bei 120°C getrockneten Filme waren direkt nach Abkühlung vollständig lösemittelfest.

Untersuchungen zur Wasserfestigkeit wurden so durchgeführt, daß auf die bei 120°C gehärteten Filme ein nasser, mit einer Petrischale abgedeckter Wattebausch gelegt wurde. Der Film wurde dann an der Auflagestelle stündlich auf Veränderungen geprüft. Innerhalb von 6 Stunden konnten hierbei keine Veränderungen festgestellt werden.

Beispiel 7

100 Gew.-Teile des Polyacrylatharzes 1 mit einem Feststoffgehalt von 39,7 Gew.-% werden mit 11,7 Gew.-Teilen des handelsüblichen und vorher beschriebenen Glycidylethers A intensiv verrührt. Es entsteht ein transparenter Zweikomponentenlack mit einem Verhältnis von Carboxyl- zu Epoxidgruppen von 1 : 1. Die Verarbeitungszeit des Ansatzes beträgt über 24 h. Der verarbeitungsfertige Lack setzt sich wie folgt zusammen:

| Bindemittel fest: | 46,02 Gew.-% |
|---|---|
| Wasser: | 50,40 Gew.-% |
| Organische Löser: | 3,58 Gew.-% |
| | 100,00 Gew.-% |

Der in einer Naßfilmdicke von 200 $\mu$m (= 50 bis 60 $\mu$m trocken) aufgetragene Film trocknet über Nacht zu einem harten, völlig transparenten Film auf, Die Härtungsreaktion ist nach ca. 14 Tagen bei Raumtemperatur vollständig abgeschlossen. Die Eigenschaften des Flüssiglackes sowie des völlig gehärteten Filmes können wie folgt skizziert werden:

| Flüssiglack | |
|---|---|
| Verarbeitungszeit (ohne Einbußen in den Filmeigenschaften): | > 24 h |
| Staubtrocknung (Sandtrocknung): | 1,5 h |
| Drucktrocknung (Druck mit Fingerkuppe): | 5 h |

**Lackfilm**

| | |
|---|---|
| Filmoptik: Glanz: | sehr gut |
| Transparenz: | sehr gut |
| Pendelhärte (DIN 53157): | 146 Sek. |
| Löserbeständigkeit | |
| -Testbenzin: | sehr gut |
| -Solventnaphtha 100: | sehr gut |
| -Methoxypropylacetat: | sehr gut |
| -Aceton: | mäßig |
| -Ethanol: | gut - mäßig |
| Wasserfestigkeit (24 h Einwirkung): | gut |

Beispiel 8

Dieses Beispiel entspricht in Bezug auf seine Zusammensetzung der Reaktionskomponente Beispiel 7, mit dem Unterschied, daß zur Reaktionsbeschleunigung 0,23 Gew.-Teile Tridimethylaminomethylphenol (Beschleuniger DMP 30, Fa. Rohm und Haas, Frankfurt/M.) zugesetzt wurden. Die Auswertung der Prüfergebnisse ergibt folgende Bewertung:

| Flüssiglack | |
|---|---|
| Verarbeitungszeit | > 24 h |
| Staubtrocknung: | 0,5 h |
| Drucktrocknung: | 1,0 h |

```
Lackfilm
Filmoptik: Glanz:                              sehr gut
          Transparenz:                         sehr gut
Pendelhärte (DIN 53157):                       150 - 160 Sek.
Löserbeständigkeit
-Testbenzin:                                   sehr gut
-Solventnaphtha 100:                           sehr gut
-Methoxypropylacetat:                          sehr gut
-Aceton:                                       mäßig
-Ethanol:                                      sehr gut
Wasserfestigkeit (24 h Einwirkung):            gut
```

Beispiel 9

Dieses Beispiel entspricht in Bezug auf die ZusammenSetzung der Reaktionskomponenten Beispiel 7. Der Lack wurde jedoch nicht bei Raumtemperatur, sondern während 30 min bei 120°C gehärtet. Die Eigenschaften des gehärteten Films können wie folgt skizziert werden:

```
Filmoptik: Glanz:                              sehr gut
          Transparenz:                         sehr gut
Pendelhärte:                                   160 - 170 Sek.
Löserbeständigkeit
-Testbenzin:                                   sehr gut
-Solventnaphtha 100:                           sehr gut


-Methoxypropylacetat:                          sehr gut
-Aceton:                                       sehr gut
-Ethanol:                                      gut
Wasserfestigkeit:                              gut
```

Beispiel 10

100 Gew.-Teile der wäßrigen Polyacrylatharz-Dispersion 2 mit einem Festkörpergehalt von 40,8 Gew.-% werden mit 21,32 Gew.-Teilen eines handelsüblichen Titandioxid Rutil-Typs (Bayertitan R-KB-4, Bayer AG Leverkusen) verrührt und dann einer Dissolver-Dispergierung während 30 min bei einer Drehgeschwindigkeit von 15 bis 20 m pro Sek, unterworfen. Man erhält so die Dispergierkomponente für einen Zweikomponenten-Weißlack mit praktisch unbegrenzter Lagerstabilität. Die Verwendung weiterer Dispergieradditive ist nicht erforderlich. Dieser Dispergieransatz von 121,32 g wird nun mit 12,30 g des genannten Glycidylethers A versetzt und homogen verrührt, Das Verhältnis von Carboxyl- zu Epoxidgruppen beträgt 1 : 1. Der verarbeitungsfertige Ansatz setzt sich wie folgt zusammen:

| Bindemittel fest | 39,74 Gew.-% |
|---|---|
| Pigment | 15,95 Gew.-% |
| Wasser | 40,19 Gew.-% |
| Org. Löser | 4,12 Gew.-% |
| | 100,00 Gew.-% |

Der Ansatz wird nun in einer Naßfilmdicke von 200 $\mu$m (= 50 bis 60 $\mu$m trocken) appliziert. Nach Trocknung über Nacht erhält man einen zähharten, glänzenden Film, Die Härtungsreaktion ist nach einer Trockenzeit von 10 bis 14 Tagen völlig abgeschlossen. Die Eigenschaften des Flüssiglackes sowie des vollständig ausgehärteten Filmes können wie folgt skizziert werden:

| Flüssiglack | |
|---|---|
| Verarbeitungszeit (ohne Einbußen in den Filmeigenschaften): | 10 - 15 h |
| Staubtrocknung (Sandtrocknung): | 0,5 h |
| Drucktrocknung (Druck mit Fingerkuppe): | 1 - 1,5 h |

**Lackfilm**

| | |
|---|---|
| **Filmoptik: Glanz:** | **sehr gut** |
| **Pendelhärte:** | **150 - 160 Sek.** |
| **Löserbeständigkeit** | |
| **-Testbenzin:** | **sehr gut** |
| **-Solventnaphtha 100:** | **sehr gut** |
| **-Methoxypropylacetat:** | **sehr gut** |
| **-Aceton:** | **gut** |
| **-Ethanol:** | **sehr gut** |
| **Wasserfestigkeit (24 h Einwirkung):** | **gut** |

**Patentansprüche**

1. Wäßriges Beschichtungsmittel, bestehend im wesentlichen aus einer wäßrigen Lösung und/oder Dispersion von

a) einer Polyacrylat-Komponente, bestehend aus mindestens einem, gegebenenfalls teilweise in der Salzform vorliegende carboxyl- oder sulfonsäurefunktionellen Copolymerisat olefinisch ungesättigter Monomerer mit einer Säurezahl von 30 bis 240 mg KOH/g, einer Hydroxylzahl von 0 bis 180 mg KOH/g und einem Molekulargewicht Mn von 500 bis 50.000,

b) einer Epoxid-Komponente, bestehend aus

b1) mindestens einem aliphatischen oder cycloaliphatischen Epoxidharz mit im Mittel mindestens 2 Epoxidgruppen pro Molekül und einem Epoxidwert von 0,2 bis 2,0 Äquivalenten Epoxid/100 g und gegebenenfalls

b2) bis zu 20 Gew.-%, bezogen auf das Gewicht von b1), mindestens eines aliphatischen Monoepoxids mit 7 bis 25 Kohlenstoffatomen,

c) gegebenenfalls bis zu 10 Gew.-%, bezogen auf das Gesamtgewicht der Komponente a) bis e) eines organischen, mit Wasser mischbaren Lösungsmittels, gegebenenfalls

d) bis zu 5 Gew.-%, bezogen auf das Gesamtgewicht der Komponenten a) bis e) an externen Emulgatoren sowie gegebenenfalls

e) aus der Lacktechnologie an sich bekannten Hilfs- und Zusatzmitteln

mit der Maßgabe, daß Art und Mengenverhältnisse der Komponenten a) und b) einem Äquivalentverhältnis von unneutralisierten Säuregruppen der Komponente a) zu Epoxidgruppen der Komponente b) von 1:0,5 bis 1:3 entsprechen.

2. Wäßriges Beschichtungsmittel gemäß Anspruch 1, dadurch gekennzeichnet, daß die Komponente a) aus mindestens einem Copolymerisat aus

a1) 0 bis 70 Gew.-% Styrol,

a2) 0 bis 70 Gew.-% Methylmethacrylat,

a3) 0 bis 70 Gew.-% eines Acrylatkomponente, bestehend aus mindestens einem $C_1$-$C_8$-Alkylacrylat,

a4) 0 bis 30 Gew.-% mindestens einer hydroxylgruppenaufweisenden Komponente, bestehend aus mindestens einem Hydroxyalkyl(meth)acrylat mit 1 bis 4 Kohlenstoffatomen im Hydroxyalkylrest,

a5) 5 bis 40 Gew.-% einer Säure-Komponente, bestehend aus mindestens einer Säure, ausgewählt aus der Gruppe bestehend aus Acrylsäure, Methacrylsäure und Vinylsulfonsäure,

a6) 0 bis 30 Gew.-% an anderen ethylenisch ungesättigten Monomeren

besteht, mit der Maßgabe, daß die Summe der prozentualen Anteile der Komponenten a1) bis a6) 100 Gew.-% ergibt und 0 bis 30 Mol-% der eingebauten Säuregruppen in mit aliphatischen Aminen oder Ammoniak neutralisierter Form vorliegen.

3. Beschichtungsmittel gemäß Anspruch 1 und 2, dadurch gekennzeichnet, daß die Komponente a) aus mindestens einem in wäßrigem Milieu hergestellten Emulsionspolymerisat besteht.

4. Verwendung der Beschichtungsmittel gemäß Anspruch 1 und 3 zur Herstellung von bei 5 bis 140°C auszuhärtenden Beschichtungen auf beliebigen festen Substraten.

5. Verwendungen des Anspruchs 4 zur Beschichtung von Holz, Metall, Kunststoffen oder mineralischen Substraten.

Europäisches
Patentamt

# EUROPÄISCHER RECHERCHENBERICHT

Nummer der Anmeldung

EP    93 11 0110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 492 252 (EUCHNER, KIEFER) <br> * Anspruch 1; Beispiele 1-7,9-11 * <br> --- | 1 | C09D133/06 <br> C09D163/00 |
| X | BE-A-664 054 (PPG COMP) <br> * Ansprüche; Beispiele 8,9 * <br> --- | 1 | |
| X | US-A-3 069 376 (CLINE JR) <br> * Ansprüche 1,2,4; Beispiele 14,15 * <br><br> ----- | 1 | |

RECHERCHIERTE SACHGEBIETE (Int. Cl.5 )

C09D

Der vorliegende Recherchenbericht wurde für alle Patentansprüche erstellt

| Recherchenort | Abschlußdatum der Recherche | Prüfer |
|---|---|---|
| DEN HAAG | 20 OKTOBER 1993 | Dieter  Schüler |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)